Europäisches Patentamt

European Patent Office

Office européen des brevets

(19)

(11) **EP 1 375 985 A1**

(12) ## EUROPEAN PATENT APPLICATION

(43) Date of publication:
**02.01.2004 Bulletin 2004/01**

(51) Int Cl.⁷: **F16K 1/22**, F02D 9/10, F16K 1/226

(21) Application number: **03013456.3**

(22) Date of filing: **24.06.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.06.2002 JP 2002183796**

(71) Applicant: **Hitachi, Ltd.**
**Chiyoda-ku, Tokyo 101-8010 (JP)**

(72) Inventors:
• **Oyamada, Tomonaga**
**Niihari-gun, Ibaraki 315-0054 (JP)**

• **Yanagase, Yuuichi**
**Namegata-gun, Ibaraki 311-3514 (JP)**
• **Kowatari, Takehiko**
**Kashiwa-shi, Chiba 277-0028 (JP)**
• **Minegishi, Teruhiko**
**Hitachinaka-shi, Ibaraki 312-0031 (JP)**
• **Wayama, Eisuke**
**Hitachinaka-shi, Ibaraki 312-0017 (JP)**

(74) Representative: **Beetz & Partner Patentanwälte**
**Steinsdorfstrasse 10**
**80538 München (DE)**

(54) **Throttle valve with sealed shaft**

(57)   The invention relates to a throttle system which can reduce the amount of air leakage from the air cleaner side of the throttle system into the engine side on an occasion where the throttle valve (5) is set to a closed position. The seal material (43) is installed in the course of the air passage that runs from the upstream side of the suction passage (3), passes through the upstream side of the gap (35) between the shaft (7) and through hole (25), communicates with the gap (37) surrounded by the stepped recession (29), shaft (7) and bearing (31) of the throttle body (1), runs in the circumferential direction of the shaft (7) and through the downstream side of the gap (35), and reaches the downstream side of the suction passage (3).

FIG. 5

## Description

Background of the Invention

<Field of Utilization in Industry>

The present invention relates to a throttle system for adjusting the suction air flow in an internal combustion engine, particularly to a mechanism that reduces the air leaking through the throttle system while the throttle valve is closed.

<Prior Art>

Because it is difficult in a throttle system used, for example, in an engine to completely seal the gaps between component parts, air leakage is caused through the gaps between component parts even when the throttle valve is at a closed position.

Particularly in a low speed operating condition, such as in an idling operation, where the air flow required by the engine is less, it is difficult to control the air flow precisely because percentage of the air leakage through the gaps between component parts increases in the necessary air flow but the controllable air flow in the throttle valve decreases relatively.

Besides, in order to run an engine at a lower speed, it is necessary to extremely lower the air leakage through the gaps between component parts because the air leakage determines the minimum air flow of the throttle system.

A known throttle system according to a prior art, such as one disclosed in the Japanese Application Patent Laid-open Publication No. Hei 11-210503, has a construction that a shaft is supported in a cylindrical throttle body by anti-friction bearings equipped with a seal mechanism and a disc-shaped throttle valve, fastened on the shaft, is so installed as to be able to rotate. It is described therein that, with this construction, the seal mechanism provided in the bearing operates to prevent air from leaking outside the throttle body.

With a construction according to the prior art, a shaft runs across the suction passage of a throttle body and the shaft is so supported by anti-friction bearings as to be able to rotate. Because of this, through holes for the shaft to be inserted through and stepped recessions, stepped in the depth direction, for the anti-friction bearings to be installed are formed in the throttle body. The through hole is made with a larger diameter than the shaft in order to prevent friction, abrasion or seizure to be caused in case it contacts with the shaft. As a result of the above, a gap is formed between the shaft and through hole.

In addition, if the anti-friction bearing is installed in the stepped recession of the throttle valve, it is necessary to provide a clearance in order to prevent friction, abrasion or seizure to be caused in case the rotating inner ring of the anti-friction bearing contacts with the throttle body, and the clearance forms a gap surrounded by the anti-friction bearing, shaft and stepped recession of the throttle body.

These two gaps communicate with each other and, besides, the former gap communicates with the suction air passage of the throttle body that is the primary air passage in which the incoming air into the engine can be controlled. Because of the above reason, a throttle system as above is in a condition that air can easily flow from the high-pressure upstream side of the suction air passage into the low-pressure downstream side of the suction air passage, generating a flow passage through these gaps.

Since a lot of air flows from the air cleaner side into the engine suction side through the above air passage, there arises a problem that the practical amount of air leaking into the engine can hardly be reduced even under a condition where the throttle valve is closed and the primary air passage is shut up.

Summary of the Invention:

An object of the present invention is to reduce the air leakage in a throttle system of an engine under a condition where the throttle valve is at a closed position.

The present invention solves the above-mentioned problem by providing a throttle system, in which a through hole for the shaft of a throttle valve to be inserted through can be formed.

A recession, with a diameter larger than the through hole, for installing a bearing that supports the shaft to allow to rotate can be formed outside the through hole, and/or an enlarged recession larger than the through hole can be formed between the through hole and recession.

Further, a bearing can be installed in the recession so as to support the shaft to allow to rotate; and/or a seal structure can be provided at an area including the through hole or an area including the boundary between the enlarged recession and through hole.

Further, such a throttle system can be equipped with a seal structure for reducing the air flow in the course of the air passage through the above-mentioned gap between the shaft and throttle body and/or the gap surrounded by the shaft, bearing and throttle body.

Brief Description of Drawings:

Fig. 1 is a cross-sectional view of a throttle system to which the present invention applies;
Fig. 2 is an enlarged cross-sectional view of a portion around the follow side stepped recession in Fig. 1;
Fig. 3 is an Y-Y cross-sectional view of Fig. 2;

Fig. 4 is an X-X cross-sectional view of Fig. 3;

Fig. 5 is an enlarged cross-sectional view of a portion around the follow side stepped recession of the throttle system according to the first embodiment of the present invention;

Fig. 6 is an enlarged cross-sectional view of a portion around the follow side stepped recession of the throttle system according to the second embodiment of the present invention;

Fig. 7 is an enlarged cross-sectional view of a portion around the follow side stepped recession of the throttle system according to the third embodiment of the present invention;

Fig. 8 is an enlarged cross-sectional view of a portion around the follow side stepped recession of the throttle system according to the fourth embodiment of the present invention;

Fig. 9 is an enlarged cross-sectional view of a portion around the follow side stepped recession of the throttle system according to an embodiment of the present invention where the flow passage is sealed with adaptive material;

Fig. 10 is a diagram that defines the cross-sectional area S2 in the flow passage direction in the gap equivalent to the circumferential flow passage;

Fig. 11 is a diagram that defines the cross-sectional area S1 in the flow passage direction in the gap between the through hole and shaft;

Fig. 12 is an example of air leakage measurement result on a throttle system according to an embodiment of the present invention, where the throttle valve is set to a completely closed position; and

Fig. 13 is an enlarged cross-sectional view of a portion around the follow side stepped recession of the throttle system, equipped with slide bearing, to which the present invention applies.

Description of the Invention:

Preferred embodiments of the present invention are described hereunder, using figures.

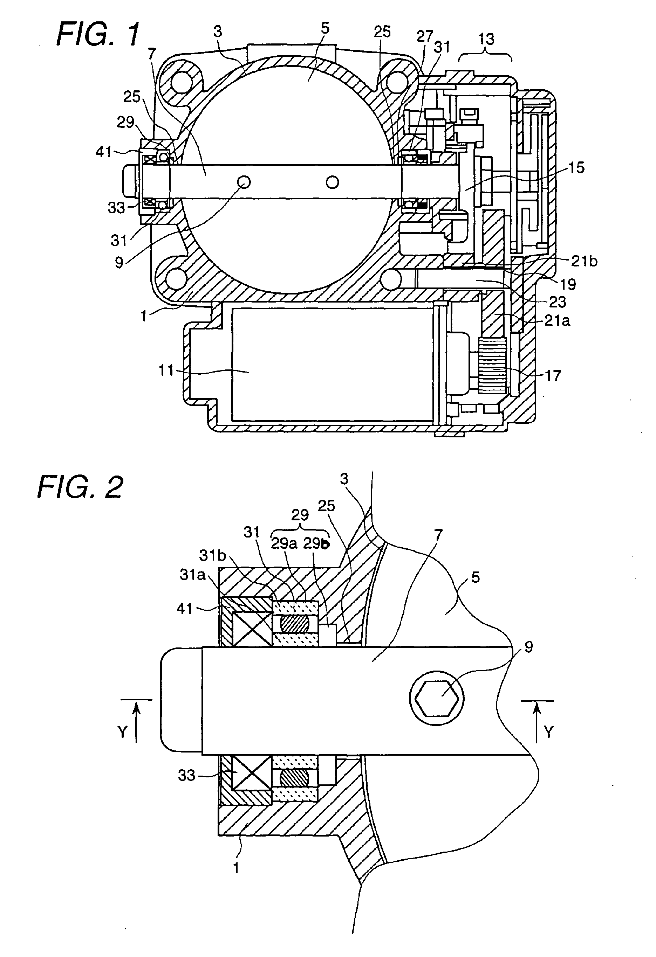

Fig. 1 shows a construction of a general electronic-control throttle system (throttle system for an automotive internal combustion engine) to which the present invention applies. As well known, the electronic-control throttle system is to control the air flow incoming into the internal combustion engine.

The amount of the air that flows through a suction passage 3 in a throttle body 1 in the direction perpendicular to the surface of the paper is adjusted according to the opening of a throttle valve 5. The throttle valve 5 is fastened onto a shaft 7 with set screws 9.

The shaft 7 is inserted into a through hole 25 provided on each side of the suction passage 3 and supported by a bearing 31 fastened onto each drive side stepped recession 27 and follow side stepped recession 29 so as to be able to rotate. An anti-friction bearing 31 is employed in this embodiment.

On one end of the shaft 7, the final stage gear (hereinafter called the throttle gear) 15 of the reduction gear mechanism 13 that transmits the power of a motor (electric actuator) 11 to the shaft 7 is mounted. The gear mechanism 13 comprises the throttle gear 15, pinion gear 17 mounted on the motor, and intermediate gear 19.

The intermediate gear 19, comprising a large diameter gear 21a engaged with the pinion gear 17 and a small diameter gear 21b engaged with the throttle gear 15, is set on a gear shaft 23 fixed on the wall of the throttle body 1 to be able to rotate freely.

The motor 11 is driven in accordance with an acceleration signal or traction control signal interlocked with the acceleration pedal motion, and the power of the motor 11 is transmitted to the shaft 7 via the gears 17, 19 and 15 to operate the throttle valve 5.

Fig. 2 is an enlarged portion of Fig. 1 where the shaft 7 is supported by the follow side stepped recession 29 and anti-friction bearing 31. The follow side stepped recession 29, comprising a bearing fastening portion 29a into which the anti-friction bearing is inserted and a clearance 29b which prevents the inner ring 31a, capable of rotating freely in the anti-friction bearing 31, from contacting with the throttle body, is formed in the throttle body 1 concentrically with the through hole 25.

Generally, the clearance 29b is smaller in diameter than the bearing fastening portion 29a, and the fastening position of the anti-friction bearing 31 is decided as the end of the bearing 31 is pressed onto the throttle valve side wall, resulting from the step, of the bearing fastening portion 29a. A seal 33 and a cover 41 are installed outside the anti-friction bearing 31 to prevent air and lubricant from leaking out of the throttle system.

The stepped recessions 27 and 29 are hereunder explained in detail. The stepped recession 27 and 29 are each formed in a manner that, when viewing from insertion direction of the through hole 25 (axial direction of the shaft 7), multiple recessions each having a circular cross section are provided to form steps in the depth direction.

In other words, a stepped recession is formed as a recession with a large diameter is first formed from the outside of the throttle body 1 and then another recession with a small diameter is formed more deeply (in the bottom of the previous recession).

The bearing structure of the shaft 7 above means that an enlarged recession (enlarged hole) 29b larger than the through hole 25 is formed between the through hole 25 side of the recession 29a wherein the bearing 31 being installed (or that of the bearing 31) and the through hole 25.

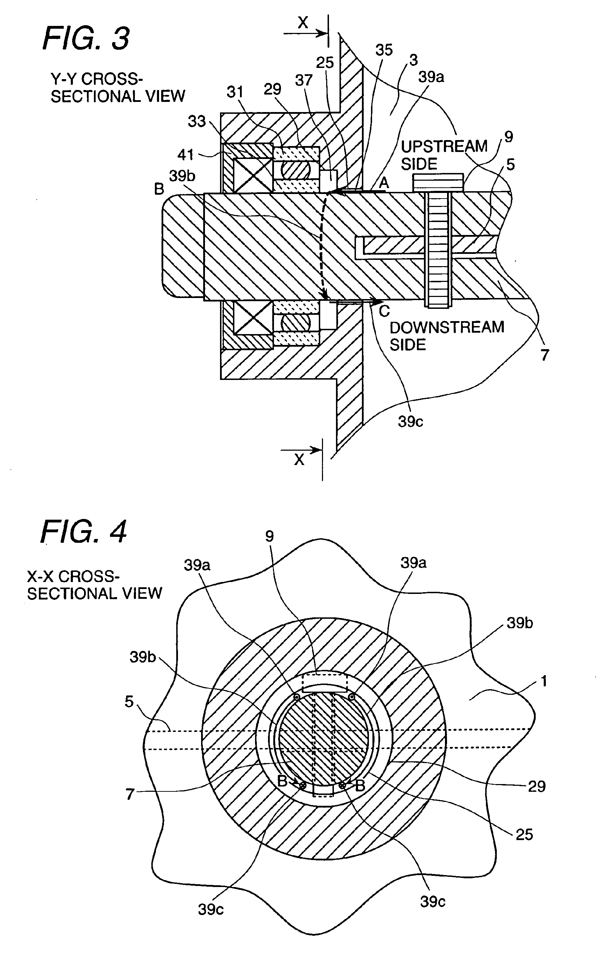

Fig. 3 is an Y-Y cross-sectional view of Fig. 2, and Fig. 4 is an X-X cross-sectional view of Fig. 3. In these figures, the upper side of the surface of the paper is the upstream and the lower surface is the downstream of the throttle valve in the suction passage 3. The through hole 25 is formed with a larger diameter than the shaft 7 in order to prevent excessive friction, abrasion or seizure to be caused by contact with the rotating shaft 7.

As a result of the above, a gap 35 is formed between the through hole 25 and shaft 7, and the gap 35 communicates with the gap 37 surrounded by the follow side stepped recession 29, anti-friction bearing 31 and shaft 7 on one end and with the suction passage 3 on the other end in both upstream and downstream. The air, therefore, can move between the upstream side and downstream side of the suction passage 3 through the above gaps.

If there arises a pressure differential as the upstream side becomes high pressure and the downstream side becomes low pressure, part of the air flowing in the suction passage 3 turns to flow firstly through the upstream through hole flow passage 39a, which is the upstream side of the gap between the through hole 25 and shaft 7, into the gap 37 surrounded by the follow side stepped recession 29, anti-friction bearing 31 and shaft 7, as shown by arrow A in Fig. 3.

Then, the air flows downstream along the circumference of the shaft 7 through the circumferential flow passage 39b as shown by arrow B in Fig. 4, and can leak out into the downstream of the suction passage 3 through the downstream through hole flow passage 39c, which is the downstream side of the gap 35 between the through hole 25 and shaft 7 as shown by arrow C in Fig. 3.

Because a leak passage like the above exists irrespective of the opening of the throttle valve 5 and also exists even on an occasion when the throttle valve 5 is set to the closed position to extremely restrict the air flow through the throttle system, it can be a factor of deteriorating the precision in air flow control.

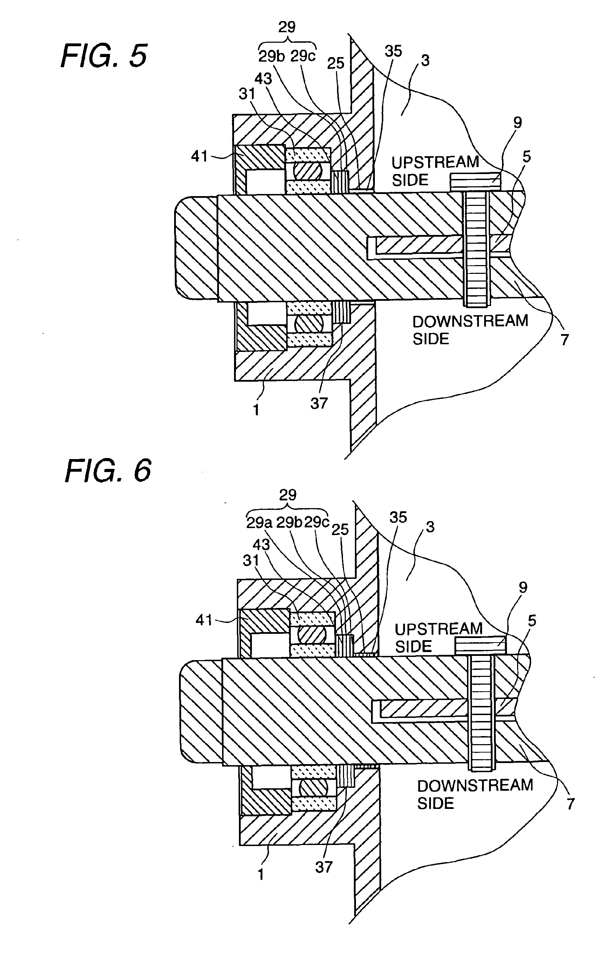

Fig. 5 shows the first embodiment of a throttle system to which the present invention applies. In the air passage shown in Fig. 3, seal material 43 is inserted inside the gap 37 which, surrounded by the follow side stepped recession 29, anti-friction bearing 31 and shaft 7, can generate a circumferential flow passage 39b, and this construction prevents the flow passage from being generated.

The seal material 43, of which outside diameter is equal to or smaller than but nearly equal to the diameter of the clearance 29b, is made into a doughnut shape having a through hole of which diameter is equal to or larger than but nearly equal to the diameter of the shaft 7.

The seal material 43 contacts with the throttle valve side wall 29c of the follow side stepped recession 29, which is at the stepped recession side opening of the through hole, and the circumferential surface of the shaft 7, and produces a sealing effect at each contact area, preventing the air that flows out of the suction passage 3 through the gap 35 between the through hole 25 and shaft 7 from entering into the downstream side of the suction passage 3 and into the anti-friction bearing 31 side. In this embodiment, a seal structure is provided at an area including the boundary between the clearance 29b and through hole 25.

Fluorocarbon resin is used for the seal material 43 so as to prevent excessive increase of the drive torque at the anti-friction bearing 31 and shaft 7 that results from excessive friction to be caused by contact with the inner ring of the anti-friction bearing 31 or with the shaft 7. Because of the above, in this construction, only a cover 41 is installed outside the anti-friction bearing 31 to prevent lubricant leakage from the throttle system to the outside or entry of dust from the outside into the throttle system.

Fig. 6 shows the second embodiment of a throttle system to which the present invention applies. The seal material 43, installed between the throttle valve side of the through hole 25 and anti-friction bearing 31, is formed into a stepped shape of which outside diameter is larger on the throttle valve 5 side and smaller on the anti-friction bearing 31 side.

The throttle valve side portion of the seal material 43, with a smaller outside diameter, is inserted into the gap between the through hole 25 and shaft 7 and the anti-friction gear 31 side portion, with a larger outside diameter, is inserted into the gap 37 surrounded by the follow side stepped recession 29, anti-friction bearing 31 and shaft 7.

The seal material 43 contacts with the throttle valve side wall 29c of the follow side stepped recession 29, which is at the stepped recession side opening of the through hole, and the circumferential surface of the shaft 7, and produces a sealing effect at each contact area, preventing the air that flows out of the suction passage 3 through the gap 35 between the through hole 25 and shaft 7 from entering into the downstream side of the suction passage 3 and into the anti-friction bearing 31 side.

Besides, because the throttle valve side portion of the seal material 43, with a smaller outside diameter, is inserted into the gap between the through hole 25 and shaft 7, the air flow entering into this gap from the suction passage 3 is restricted, thus producing much higher sealing effect than in the first embodiment. In this embodiment, as explained above, a seal structure is provided at an area including the boundary between the clearance 29b and through hole 25.

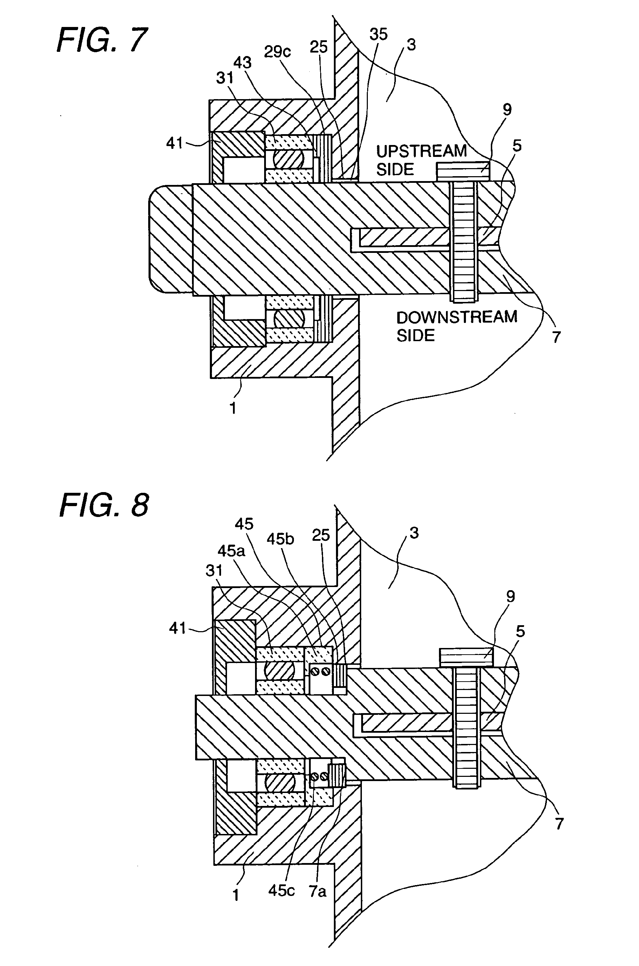

Fig. 7 shows the third embodiment of a throttle system to which the present invention applies. The seal material 43, installed between the throttle valve side of the through hole 25 and anti-friction bearing 31, has an outside diameter that is equal to or smaller than but nearly equal to the diameter of the anti-friction bearing 31.

A stepped recession is formed in the seal material 43, and the diameter of the anti-friction bearing 31 side is larger than that of the inner ring 31a of the anti-friction bearing 31 but smaller than that of the outer ring 31b. The diameter of the throttle valve 5 side is nearly equal to that of the shaft 7.

Because of the above, the seal material 43 is fixed there as the anti-friction bearing 31 side contacts with the outer ring 31b of the anti-friction bearing 31 and also the throttle valve 5 side contacts with the throttle valve 5 side wall 29c of the stepped recession, thus producing a sealing effect on each contact surface and also defining the fastening position of the anti-friction bearing.

Besides, the through hole side of the seal material 43 contacts with the outside circumferential surface of the shaft 7 and shuts up the air flow along the shaft surface. On the other hand, since the seal material 43 does not contain any portion that contacts with the inner ring 31a, this embodiment brings an advantage that the load torque applied to the rotating inner ring 31a does not increase as compared to the first and second embodiments.

In addition, since the fastening position of the anti-friction bearing 31 on the throttle body 1 can be controlled by the thickness of the seal material 43, it becomes possible to eliminate a special process of machining a clearance 29b on the throttle body.

In this embodiment, as explained above, a seal structure is provided at an area including the boundary between the clearance 29b and through hole 25.

Fig. 8 shows the fourth embodiment of a throttle system to which the present invention applies. The shaft 7 is made into a stepped shape, and the anti-friction bearing 31 side portion has a smaller diameter than the throttle valve 5 side portion. A seal mechanism component 45 is installed between the through hole 25 and anti-friction bearing 31.

The seal mechanism component 45 comprises a housing 45a, seal 45b and spring 45c. The housing 45a is sandwiched and fastened between an end of the outer ring 31b of the anti-friction bearing 31 and the throttle valve side wall 29c of the stepped recession, and hence the fastening position of the anti-friction bearing 31 is defined at the same time.

A through hole is so made in the housing 45a as not to contact with the inner ring 31a. The seal 45b, of which outside diameter is nearly equal to the diameter of the through hole 25, is formed into a cylindrical shape having a through hole of which diameter is larger than that of the smaller diameter portion of the shaft 7.

Because of an action of the spring 45c, the seal 45b is pressed at a specified force and contacts with the shaft step wall 7a, formed as a result of the stepped shaft 7, and also contacts with the surface of the through hole 25.

In a throttle system as above, the air that flows out of the suction passage 3 through the gap 35 between the through hole 25 and shaft 7 is shut up by the seal 45b and prevented from entering into the downstream side of the suction passage 3 and into the anti-friction bearing 31 side.

The housing 45a of the seal mechanism component 45 can be made of any material. If it is made of metal or ceramic, the fastening position of the anti-friction bearing 31 can be controlled more precisely than in using resin material.

Besides, since an appropriate compression force is applied onto the seal 45b by the spring 45c, sealing performance improves and also the life of the seal 45b against abrasion improves. In addition, compared to other methods, the above brings an advantage that the system can be constructed smaller using a small anti-friction bearing.

In this embodiment, as explained above, a seal structure is provided at an area including the boundary between the enlarged recession and through hole 25 and on the through hole 25.

In the above-mentioned embodiments, the seal material 43 or the material of the seal 45b of the seal mechanism component 45 is selected out of metal, resin, ceramic, or the like.

In particular, to reduce the load torque applied to the anti-friction bearing 31 and shaft 7 by contact with the rotating shaft 7 or inner ring 31a of the anti-friction bearing 31, it is effective to use resin material with high lubricity, such as fluorocarbon resin, polyether etherketone (PEEK) resin, polyimide resin, polyamide resin, or polyphenylene sulfide (PPS) resin.

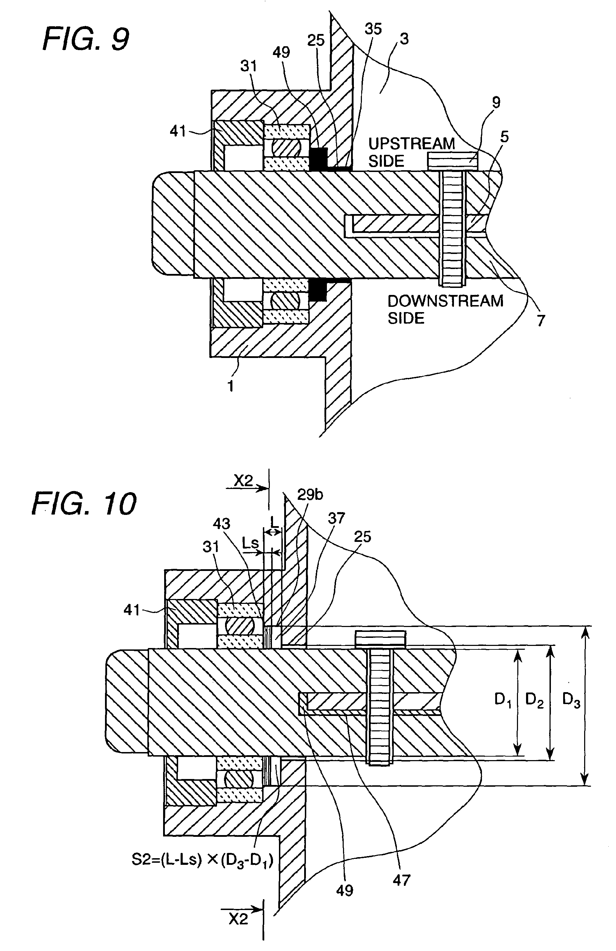

Otherwise, as shown in Fig. 9, a similar sealing effect can be attained by filling the gap surrounded by the follow side stepped recession 29, anti-friction bearing 31 and shaft 7 and gap between the shaft 7 and through hole 25 with adaptive material 49 consisting of material with excellent adaptivity and lubricity, such as manganese phosphate and molybdenum disulfide, instead of inserting the seal material 43.

The material above is put into the gaps by means of coating or applying by pressure. The adaptive material wears drastically and hence the torque loaded on the shaft 7 and anti-friction bearing 31 increases at the very beginning.

However, as it is put into continuous use and the adaptivity develops, gap is formed between the filler material and shaft 7 and also between the filler material and inner ring 31a of the anti-friction bearing 31 according to the machining error of each component part. This brings an advantage that variation in the sealing effect due to the machining error of each component part can be reduced. Besides, the above can be constructed very easily and high accuracy is not required in construction.

Next, an experiment for verifying the air leakage reduction achieved by the present invention is described hereunder.

Fig. 10 is an enlarged view of a portion around the follow side stepped recession 27 of the throttle system used for the verification. In this figure, the diameter of the shaft 7 is denoted D1, the diameter of the clearance 29b in the follow side stepped recession 29 is denoted D3, and the length of the clearance 29b of the follow side stepped recession in the axial direction of the shaft 7 is denoted L.

The seal material 43 inserted into the gap surrounded by the follow side stepped recession 29, antifriction bearing 31 and shaft 7 is made of fluorocarbon resin and formed into a cylindrical shape with the outside diameter D3, inside diameter D1 and length Ls.

Because of this, the seal material 43 contacts with the inside circumference of the clearance 29b of the stepped recession 29 and the surface of the shaft 7, and shuts off the air flow at each contact area. With this construction, the cross-sectional area capable of forming the circumferential flow passage 39b shown in Fig. 4 can be defined as Expression (1) below.

$$S2 = (L - Ls) \times (D3 - D1) \qquad (1)$$

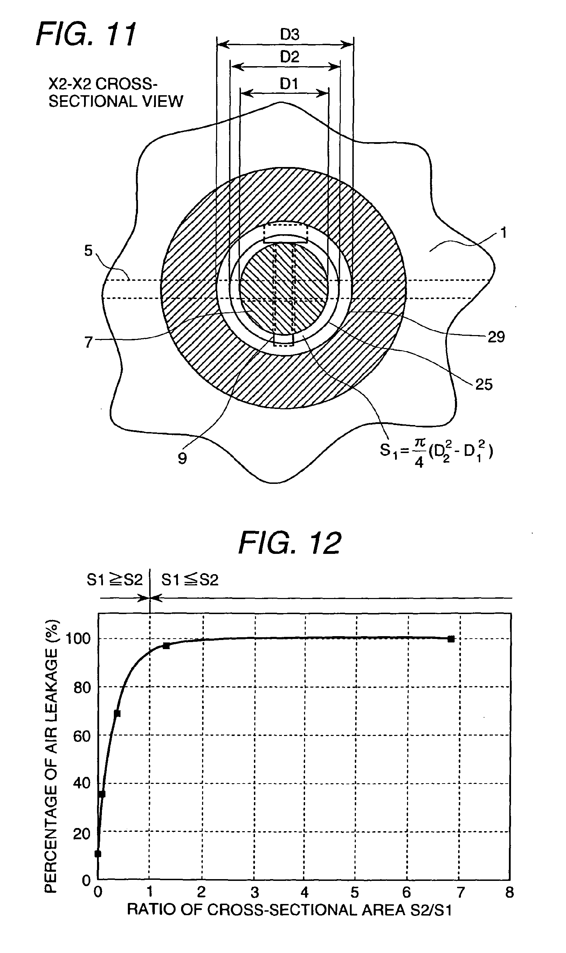

Fig. 11 is an X2-X2 cross-sectional view of Fig. 10. As shown in the figure, the cross-sectional area of the gap 35 between the through hole 25 and shaft 7 can be defined as Expression (2), where the diameter of the through hole 25 is denoted D2.

$$S1 = (D2^2 - D1^2) \times \pi/4 \qquad (2)$$

A throttle system equipped with the shaft 7 of 10 mm in diameter and through hole 25 of 10.2 mm in diameter is used in this embodiment. The throttle valve 5 is fixed at the completely closed position to shut up the air flow in the suction passage 3. Besides, in order to prevent air leakage through a gap between the throttle valve 5 and slit 47 for fastening the throttle valve 5 on the shaft 7, the gap is sealed by filling with adaptive material 49 with high adaptivity.

As a result of the above, the air leakage to be measured can be the leakage resulting from the gap between the through hole 25 and shaft 7 and the gap surrounded by the follow side stepped recession 29, antifriction bearing 31 and shaft 7. While the upstream side of the suction passage is set to 760 mmHg and the downstream side to 500 mmHg, the length Ls of the seal material 43 is changed and the air leakage is measured.

Fig. 12 shows the result. The horizontal axis of the chart represents the ratio of the above cross-sectional area S2 to 31, and the vertical axis represents the percentage of air leakage, where the amount of air leakage in case of inserting no seal material 43 is set to 100%.

As shown in the figure, it is found that the reduction effect of the air leakage gradually develops as the cross-sectional area of the gap 37 decreases and that the effect is very much remarkable in a range where the ratio of the cross-sectional area S2 to S1 becomes equal to or less than 1.

In addition to inserting the seal material, a possible method of realizing the desired seal structure is to specify the circumferential length L of the clearance 29b so that the ration of the cross-sectional area S2 to S1 becomes equal to or less than 1 and form the structure by machining.

In other words, the seal structure is formed so that the area of the cross section of the clearance (enlarged recession) 29b which, including the axis of the shaft, is parallel to the axis is made equal to or smaller than the area of the cross section in the gap between the circumferential surface of the shaft 7 and inner wall of the through hole 25 which crosses the axis of the shaft 7.

The above method requires no seal material and enables to reduce the number of component parts. On the other hand, considering a fact that the gap between the diameters of the shaft 7 and through hole 25 is generally as small as 0.2 mm or so, L must be set to, for example, 0.2 mm or less in order to produce a remarkable effect of air flow reduction.

Precision machining and accurate construction are necessary for the above, and securing high reliability becomes questionable. For this reason, a method by means of insertion of the seal material of adaptive material is rather preferable to facilitate machining and construction and to secure high reliability.

When the seal structure is realized by the ratio of the cross-sectional area S2 to S1 as explained above, the seal structure is formed in an area including the boundary between the clearance (enlarged recession) 29b and through hole 25.

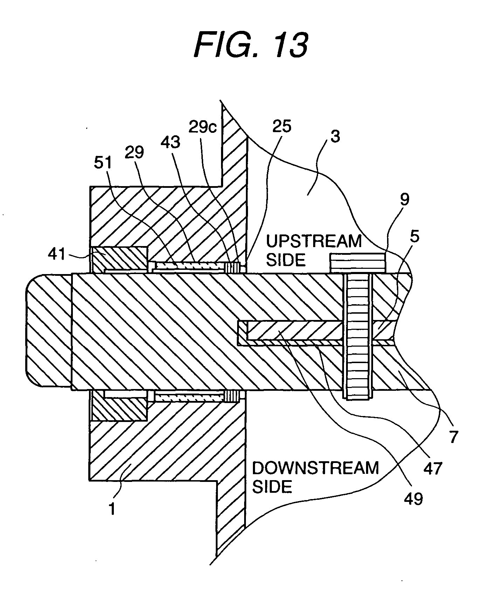

Fig. 13 shows an embodiment of a throttle system equipped with slide bearing to which the present invention applies. The slide bearing 51, which is press-fit and held inside the follow side stepped recession 29, supports the shaft 7 to allow to rotate as it contacts with and slides along the shaft. Normally, a gap of 1/100 to 1/1000 of the diameter is provided between the inside diameter of the slide bearing 51 and outside diameter of the shaft 7.

If, however, the air flows into this gap from the gap between the shaft 7 and through hole 25, a flow passage into the downstream is generated. In this embodiment, in order to prevent the above, the seal material 43 is installed between the slide bearing 51 and throttle valve side opening end of the through hole 25 in the follow side stepped recession 29.

The seal material 43 is made into a doughnut shape having a through hole of which diameter is equal to or larger than but nearly equal to the diameter of the shaft 7. The seal material 43 contacts with the throttle valve side wall 29c of the follow side stepped recession 29, which is at the stepped recession side opening of the through hole 25, and the circumferential surface of the shaft 7, and produces a sealing effect at each contact area, preventing the air that flows out of the suction passage 3 through the gap between the through hole 25 and shaft 7 from entering into the gap between the slide bearing 51 and shaft 7.

Besides, when the throttle valve 5 is inserted and fastened in the slit 47, which is formed on the shaft 7 for fastening the throttle valve 5, the width of the slit 47 must be larger than the thickness and width of the throttle valve 47, and a gap is generated there because of this reason.

If the gap communicates with the gap between the through hole 25 and shaft 7, a flow passage is generated from the upstream side of the suction passage 3 into the downstream side, resulting in air leakage. To prevent this in the embodiment shown in Fig. 13, the gap between the throttle valve 5 and slit 47 for fastening the throttle valve 5 is sealed by filling it with adaptive material 49 with high adaptivity. As a result of this seal, air leakage can be further reduced.

In each embodiment above, description has been made on a precondition that the shape of the cross section of the stepped recession 29 viewing from the axial direction of the shaft 7 is circular, it is not always necessary to make the cross section circular if ease of manufacturing or shape of the bearing 31 need not be considered.

In such a case, the clearance (enlarged recession) 29b is formed in an area including the whole cross section that crosses the axis of the shaft 7 in the through hole 25, and the recession 29a in which the bearing 31 is installed is formed in an area including the whole cross section of the clearance (enlarged recession) 29b viewing from the axial direction of the shaft 7.

According to the present invention, it becomes possible to reduce the air leakage through the gap surrounded by the shaft, throttle body and bearing of the throttle system.

Since drastic reduction of the amount of air leakage from the air cleaner side of the throttle system into the engine side is feasible on an occasion where the throttle valve is set to a closed position, it becomes possible to realize a throttle system that performs precise air flow control in a low speed engine operation that does not require much air flow.

## Claims

1. A throttle system, wherein

a through hole (25) for the shaft (7) of a throttle valve (5) to be inserted through is formed,

a recession (29a), with a diameter larger than the through hole (25), for installing a bearing (31) that supports the shaft (7) to allow to rotate is formed outside the through hole (25),

and an enlarged recession (29b) larger than the through hole (25) is formed between the through hole (25) and recession (29a);

a bearing (31) is installed in the recession (29a) so as to support the shaft (7) to allow to rotate; and

a seal structure (33) is provided at an area including the through hole (25) or an area including the boundary between the enlarged recession (29b) and through hole (25).

2. A throttle system according to Claim 1, wherein the enlarged recession (29b) is smaller in diameter than the recession (29a) and a combination of the recession (29a) and enlarged recession (29b) forms a stepped recession (29).

3. A throttle system according to at least one of the Claims 1 to 2, wherein the seal structure (33) is constructed of seal material made of fluorocarbon resin, polyether etherketone resin, polyimide resin, polyamide resin, or polyphenylene sulfide resin.

4. A throttle system according to at least one of the Claims 1 to 3, wherein the seal structure (33) is so constructed that the area of a cross section in the enlarged recession (29b) which, including the axis of the shaft (7), is parallel to the axis is made equal to or smaller than the area of a cross section in the gap between the circumferential surface of the shaft (7) and inner wall of the through hole (25) which crosses the axis of the shaft (7).

5. A throttle system which is provided with a throttle body (1), comprising a shaft (7) that crosses the suction passage (3) of a throttle body (1) and can support the throttle valve (5) midway in the suction passage, (3) bearings (31) that support the shaft (7) to allow to rotate axially, seal material (33), through holes (25) for the shaft to be inserted through the throttle body (1) across the suction passage (3), and stepped recessions (27, 29) for installing the bearings (31), and controls the suction air flow in an internal combustion engine by operating the throttle valve (5),

wherein seal material (33) is provided between the suction passage (3) side end of the bearing (31) and suction passage (3) side opening of the through hole (25) so that the contact surface between the seal material (33) and stepped recession (27, 29) side opening of the through hole (25) and the contact surface between the seal material (33) and shaft (7) surface are sealed.

6. A throttle system which is provided with a throttle body (1), comprising a shaft (7) that crosses the suction passage (3) of a throttle body (1) and can support the throttle valve (5) midway in the suction passage (3), bearings (31) that support the shaft (7) to allow to rotate axially, seal material (33), through holes (25) for the shaft (7) to be inserted through the throttle body (1) across the suction passage (3), and stepped recessions (27, 29) for installing the bearings (31), and controls the suction air flow in an internal combustion engine by operating the throttle valve (5),

wherein seal material (33) is provided between the suction passage (3) side end of the bearing (31) and suction passage (3) side opening of the through hole (25) so that the contact surface between the seal material (33) and inside circumference of the stepped recession (27, 29) or through hole (25) and the contact surface between the seal material (33) and shaft surface are sealed.

7. A throttle system which is provided with a throttle body (1), comprising a shaft (7) that crosses the suction passage (3) of a throttle body (1) and can support the throttle valve (5) midway in the suction passage (3), bearings (31) that support the shaft (7) to allow to rotate axially, seal material (33), through holes (25) for the shaft (7) to be inserted through the throttle body (1) across the suction passage (3), and stepped recessions (27, 29) for installing the bearings (31), and controls the suction air flow in an internal combustion engine by operating the throttle valve (5),

wherein the shaft (7) is made into a stepped shape having a larger diameter on the suction passage (3) side and smaller diameter on the throttle body (1) outward side and the contact surface between the seal material (33) and side surface of the stepped shape of the shaft (7) and the contact surface between the seal material (33) and inside circumference of the stepped recession (27, 29) or inside circumference of the through hole (25) are sealed.

8. A throttle system according to at least one of Claims 5 to 7, wherein the bearing (31) is an anti-friction roller, the diameter of the seal material (33) is equal to or smaller than that of the anti-friction bearing outer ring (31b), and there is provided a stepped recession (29), as if the step is directed through the seal material (33), in which the diameter of one recession is equal to or larger than the anti-friction roller inner ring (31a) and smaller than the outer ring (31b) and the diameter of the other recession is equal to or larger than that of the shaft (7) and equal to or smaller than that of the through hole (25).

9. A throttle system which is provided with a throttle body (1), comprising a shaft (7) that crosses the suction passage (3) of a throttle body (1) and can support the throttle valve (5) midway in the suction passage (3), bearings (31) that support the shaft (7) to allow to rotate axially, through holes (25) for the shaft (7) to be inserted through the throttle body (1) across the suction passage (3), and stepped recessions (27, 29) for installing the bearings (31), and controls the suction air flow in an internal combustion engine by operating the throttle valve (5),

wherein

a gap (37) surrounded by the stepped recession, shaft (7) and bearing (31) of the throttle body (1) or a gap (35) between the through hole (25) and shaft (7) of the throttle body (1) is filled with adaptive material with high adaptivity and lubricity in the course between the suction passage (3) side end of the bearing (31) and the suction passage (3) side opening of the through hole (25).

10. A throttle system which is provided with a throttle body (1), comprising a shaft (7) that crosses the suction passage (3) of a throttle body (1) and can support the throttle valve (5) midway in the suction passage (3), bearings (31) that support the shaft (7) to allow to rotate axially, a seal mechanism (45), through holes (25) for the shaft (7) to be inserted through the throttle body (1) across the suction passage (3), and stepped recessions (27, 29) for installing the bearings (31), and controls the suction air flow in an internal combustion engine by operating the throttle valve (5),

wherein

the seal mechanism (45) is so provided that the circumferential cross-sectional area in a gap (37) surrounded by the shaft (7), bearing (31) and stepped recession (27, 29) is equal to or smaller than the axial cross-sectional area in a gap (35) between the shaft (7) and through hole (25).

*FIG. 1*

*FIG. 2*

## FIG. 3

Y-Y CROSS-
SECTIONAL VIEW

UPSTREAM
SIDE

DOWNSTREAM
SIDE

## FIG. 4

X-X CROSS-
SECTIONAL VIEW

*FIG. 5*

*FIG. 6*

## FIG. 7

UPSTREAM SIDE

DOWNSTREAM SIDE

## FIG. 8

## FIG. 9

UPSTREAM SIDE

DOWNSTREAM SIDE

## FIG. 10

$S2 = (L-Ls) \times (D_3-D_1)$

## FIG. 11

X2-X2 CROSS-SECTIONAL VIEW

$$S_1 = \frac{\pi}{4}(D_2^2 - D_1^2)$$

## FIG. 12

$S1 \geqq S2$ | $S1 \leqq S2$

PERCENTAGE OF AIR LEAKAGE (%)

RATIO OF CROSS-SECTIONAL AREA S2/S1

# FIG. 13

**European Patent Office**

**EUROPEAN SEARCH REPORT**

Application Number

EP 03 01 3456

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 033 485 A (FORD MOTOR CO) 6 September 2000 (2000-09-06) * column 1 - column 2; figure 2 * | 1,5-7,10 | F16K1/22 F02D9/10 F16K1/226 |
| Y | US 3 143 132 A (PANGBURN THOMAS W) 4 August 1964 (1964-08-04) * column 1, line 16-35; figure 1 * | 1,5-7,10 | |
| Y | US 2 054 369 A (FRANCIS JR HARRY) 15 September 1936 (1936-09-15) * column 1, line 5-7 - column 2, line 5-43; figure 2 * | 1,5-7,10 | |
| A | US 3 100 500 A (STILLWAGON CRAWFORD K) 13 August 1963 (1963-08-13) * claim 1; figure 1 * | 1 | |

TECHNICAL FIELDS SEARCHED (Int.Cl.7)

F16K
F02D

The present search report has been drawn up for all claims

| Place of search | Date of completion of the search | Examiner |
|---|---|---|
| MUNICH | 27 October 2003 | Vedoato, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 03 01 3456

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2003

| Patent document cited in search report | | Publication date | Patent family member(s) | | Publication date |
|---|---|---|---|---|---|
| EP 1033485 | A | 06-09-2000 | US<br>EP | 6123318 A<br>1033485 A2 | 26-09-2000<br>06-09-2000 |
| US 3143132 | A | 04-08-1964 | DK<br>GB | 104656 C<br>983168 A | 13-06-1966<br>10-02-1965 |
| US 2054369 | A | 15-09-1936 | NONE | | |
| US 3100500 | A | 13-08-1963 | NONE | | |

EPO FORM P0459

For more details about this annex : see Official Journal of the European Patent Office, No. 12/82